# EUROPÄISCHE PATENTSCHRIFT

(11) **EP 1 421 733 B1**
(45) Veröffentlichungstag und Bekanntmachung des Hinweises auf die Patenterteilung: **30.09.2009**
(21) Anmeldenummer: 02754475.8
(22) Anmeldetag: 01.08.2002
(51) Int. Cl.: H04L 9/08

(54) **VERFAHREN ZUR VER- UND ENTSCHLÜSSELUNG VON KOMMUNIKATIONSDATEN**
METHOD FOR ENCODING AND DECODING COMMUNICATION DATA
PROCEDE POUR CODER ET DECODER DES DONNEES DE COMMUNICATION

(30) Priorität: 30.08.2001 DE 10142498
(43) Veröffentlichungstag der Anmeldung: 26.05.2004
(73) Patentinhaber: SIEMENS AKTIENGESELLSCHAFT, 80333 München (DE)
(72) Erfinder: FELLERER, Josef, 80689 München (DE)
(86) Internationale Anmeldenummer: PCT/DE2002/002837
(87) Internationale Veröffentlichungsnummer: WO 2003/028285

(56) Entgegenhaltungen:
- WO-A-01/54371
- DE-A- 19 911 176
- US-A- 5 185 796
- STEVENSON D ET AL: "SECURE COMMUNICATIONS IN ATM NETWORKS" COMMUNICATIONS OF THE ASSOCIATION FOR COMPUTING MACHINERY, ASSOCIATION FOR COMPUTING MACHINERY. NEW YORK, US, Bd. 38, Nr. 2, 1. Februar 1995 (1995-02-01), Seiten 45-52, XP000505359 ISSN: 0001-0782
- MCGOVERN T: "VARYING ENCRYPTION KEYS FOR A SINGLE CALL" MOTOROLA TECHNICAL DEVELOPMENTS, MOTOROLA INC. SCHAUMBURG, ILLINOIS, US, Bd. 24, 1. März 1995 (1995-03-01), Seiten 61-62, XP000500340 ISSN: 0887-5286

## Beschreibung

Die Erfindung betrifft ein Verfahren zur Ver- und Entschlüsselung von Kommunikationsdaten gemäß dem Oberbegriff des Patentanspruches 1.

Ein solches Verfahren wird von D. STEVENSON et al.: "Secure Communications in ATM Networks", Communications of the ACM, Vol.38, Februar 1995 No.2, Seite 45-52 beschrieben. Bei diesem bekannten Verfahren wird eine Schlüsselauswahl mittels der VC-Adresse eines Datenpakets durchgeführt.

Verfahren zur Ver- und Entschlüsselung von Kommunikationsdaten werden häufig bei der Datenübertragung über öffentliche Netze, wie einem auf ISDN-Standard basierenden Netz oder das Internet, als Schutzmaßnahme gegen unberechtigtes Mitlesen der übertragenen Daten angewendet. Derartige Verschlüsselungsverfahren basieren in der Regel auf der Verwendung zusätzlicher Hardware-Komponenten, welche eine Ver- und Entschlüsselung der Kommunikationsdaten durchführen.

Alternativ zu den Hardware-Komponenten oder in Kombination mit diesen Komponenten kann eine Software zur Ver- bzw. Entschlüsselung der Daten verwendet werden, jedoch erfordert dies eine hohe Rechenleistung der Verschlüsselungssysteme.

Um eine Ver- bzw. Entschlüsselung der Daten durch die Hardware-Komponenten zu ermöglichen, ist es notwendig, daß eine Übertragung bzw. Rückübertragung der Daten zu den Hardware-Komponenten stattfindet. Dies erfordert beim Verschlüsselungsvorgang zusätzliche Bearbeitungszeit, bevor die verschlüsselten Daten von einem Sende- zu einem Empfangsort übertragen bzw. an dem Empfangsort gelesen werden können.

Da bei der Internet-Telefonie (Voice over IP) kleine Datenpakete zur Übertragung der Sprachdaten genutzt werden, wobei die Datenpakete aufgrund der verbindungslosen Übertragung verschiedene Wege zu dem Empfangsort wählen können, um dort wieder zu einer vollständigen Paketsequenz zusammengefügt zu werden, muß zur Vermeidung von weiteren Bearbeitungszeiten eine schnelle Entschlüsselung der in den einzelnen Datenpaketen angeordneten Daten möglich sein, um eine gute Sprachqualität während eines Telefongespräches zu erhalten.

Um eine schnellere Übertragung der Daten zu ermöglichen, wird für die Internet-Telefonie als Transportprotokoll das User Datagram Protokoll (UDP) verwendet, welches im Vergleich zum TCP auf Fehlererkennung und -korrektur verzichtet. Datenpakete, die mit dem UDP übertragen werden, verfügen in der Regel über einen kleineren Header, der diverse Verwaltungs- bzw. Steuerungsdaten enthält. Zu derartigen Verwaltungsdaten zählen auch Fehlererkennungs- und Korrekturdaten, die in diesem Fall weggelassen werden können. Die Fehlererkennungs- und Korrekturdaten werden dann häufig von einem Protokoll aus einer höheren Schicht, wie beispielsweise dem Real Time Protocol (RTP) untersützt. Sofern der Header klein ist, ist ein relativ kleiner Overhead realisierbar. Dies führt wiederum zu einer schnelleren Verarbeitung der mit den Datenpaketen übertragenen Nutzdaten.

Aufgrund der Verwendung von UDP als Transportprotokoll ist in der Internet-Telefonie wegen der nicht vorhandenen Fehlerkorrektur durch das Protokoll keine verlustfreie Übertragung der Sprachdaten garantiert. Deshalb werden am besten einzelne, möglichst kleine Datenpakete unabhängig voneinander verschlüsselt, übertragen und entschlüsselt. Bisher basierten die Verschlüsselungs-verfahren auf einem Austausch des Schlüssels, mit dem die in den Datenpaketen enthaltenen Nutzdaten verschlüsselt wurden. Ein derartiger Schlüssel konnte vor den Nutzdaten von dem Sende- zu dem Empfangsort übertragen werden. Das zusätzliche Austauschverfahren und die damit zusammenhängende Erzeugung eines Schlüssels benötigen zusätzliche Rechen- und Übertragungszeit, wodurch die Übermittlung von Kommunikationsdaten verlängert wird. Desweiteren fallen bei den bisher bekannten Verschlüsselungsverfahren eventuell Lizenzgebühren für das Benutzen dieser Verfahren an. Die Rechenzeiten nehmen bei Verschlüsselungssystemen zu, deren Aufgabe die gleichzeitige Verschlüsselung von Daten mehrerer parallel laufender Verbindungen ist.

Demzufolge liegt der vorliegenden Erfindung die Aufgabe zugrunde, ein gattungsgemäßes Verfahren zur Ver- und Entschlüsselung von Kommunikationsdaten dahingehend weiterzubilden, daß eine schnellere und kostengünstigere Ver- und Entschlüsselung der Daten möglich ist.

Diese Aufgabe wird gemäß den Merkmalen des Patentanspruches 1 gelöst.

Ein wesentlicher Punkt der Erfindung liegt darin, daß nicht - wie bisher - ein Austauschverfahren für den Schlüssel, mit dem die Nutzdaten verschlüsselt werden, zwischen Sende- und Empfangsort angewendet werden muß, sondern statt dessen eine Schlüsselnummer als Schlüsselinformation mit den Kommunikationsdaten innerhalb eines Datenpaketes übertragen wird. Eine derartige Schlüsselnummer ermöglicht einen kleinen Header innerhalb des Datenpaketes und somit eine geringe Übertragungs- und Bearbeitungszeit der Datenpakete.

Die Schlüsselnummer wird z. B. als Index einem von mehreren innerhalb einer Schlüsseltabelle angeordneten Schlüsseln zugeordnet und ermöglicht nach Empfang des Datenpakets und Auswertung der Headerdaten ein schnelles Zugreifen auf den richtigen Schlüssel, der anschließend für die Entschlüsselung der Kommunikationsdaten verwendet wird.

Gemäß einer bevorzugten Ausführungsform wird die Schlüsselnummer an dem Sendeort mittels eines Zufallsgenerators ausgewählt, so daß von einem externen Beobachter nicht vorhergesagt werden kann, mit welchem Schlüssel ein Datenpaket übertragen wird. Da für jedes Datenpaket eine Schlüsselnummer erneut mit dem Zufallsgenerator ausgewählt wird, ist die Entschlüsselung der Nutzdaten nach dem Zusammensetzen mehrerer Datenpakete durch einen nicht berechtigten Beobachter nahezu unmöglich.

Insbesondere wird das Abhören dadurch erschwert, daß eine zufälligerweise richtige Entschlüsselung eines Pakets nicht auf einfache Weise erkannt werden kann.

Sowohl am Sende- als auch am Empfangsort werden Schlüsseltabellen mit identischem Inhalt verwendet. Die Schlüsseltabellen setzen sich aus beispielsweise 4096 Schlüsseln mit dazugehörigen Schlüsselnummern zusammen. Für eine Entschlüsselung der Kommunikationsdaten muß also nicht nur eine große Zahl an Schlüsseln, sondern auch die Zuordnung der Schlüssel jeweils zu einer Schlüsselnummer bekannt sein.

Der den Schlüssel darstellende Algorithmus kann auf dem Data Encryption Standard (DES) und/oder dem Advanced Encryption Standard (AES) basieren, welcher eine gleichzeitige Verschlüsselung und Komprimierung der Kommunikationsdaten ermöglicht. Insbesondere bei Anwendung des erfindungsgemäßen Verfahrens in der Internet-Telefonie werden dann Sprachdaten auf eine schnelle Weise verschlüsselt und komprimiert.

Vorteilhaft kann das Datenpaket zusätzlich eine Größeninformation über den Datenumfang der Nutzdaten enthalten, um so zusätzliche Auffüll-Bytes, die im Rahmen eines blockweise arbeitenden Verschlüsselungsverfahrens entstehen, als solche zu erkennen und von den Nutzdaten zu trennen.

Weitere vorteilhafte Ausführungsformen ergeben sich aus den Unteransprüchen. Zusätzliche Zweckmäßigkeiten und Vorteile werden in der nachfolgenden Beschreibung im Zusammenhang mit der Zeichnung aufgeführt. Hierbei zeigen:
Fig. 1 eine vereinfachte Darstellung von Einrichtungen, die zur Durchführung des erfindungsgemäßen Verfahrens dienen, und
Fig. 2 die Struktur eines Datenpakets mit einer Verschlüsselung der Daten gemäß dem erfindungsgemäßen Verfahren.

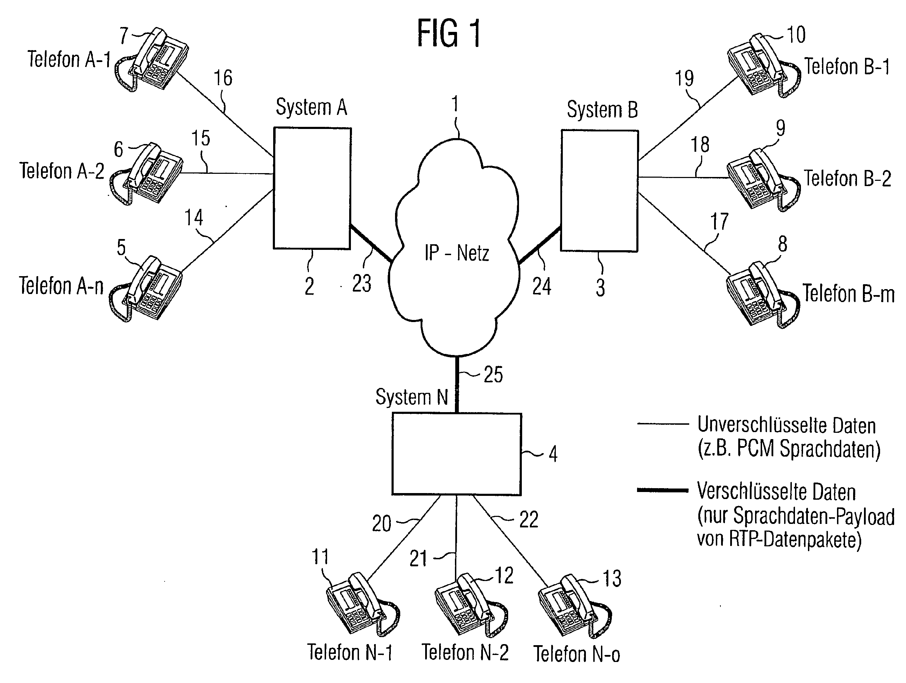

Fig. 1 zeigt in einer stark vereinfachten Darstellung Vorrichtungen, die zur Durchführung des erfindungsgemäßen Verfahrens dienen. Zur Durchführung eines Internet-Telefonats verbindet ein öffentliches IP-Netz 1 mehrere Verschlüsselungs- bzw. Entschlüsselungssysteme 2, 3 und 4, welche mit mehreren Telefonen 5-7, 8-10 und 11-13 verbunden sind. Zwischen den Telefonen 5-13 und den Systemen 2, 3 und 4 bestehen Verbindungen 14-16, 17-19 und 20-22, die Sprachdaten von den Telefonen zu den Systemen in unverschlüsselter Form übertragen. Die zwischen dem IP-Netz 1 und den Systemen 2, 3 und 4 angeordneten Verbindungen 23, 24 und 25 hingegegen dienen zur Übertragung von verschlüsselten Sprachdaten im Rahmen eines RTP-Datenpakets.

Wenn ein Benutzer des Telefons 7 über das IP-Netz mit einem Benutzer des Telefons 8 sprechen möchte, so findet eine Übertragung der Sprachdaten über die Leitung 16 zu dem System 2 statt. In dem System 2 wird zu jedem Datenpaket, in welchem die Sprachdaten übertragen werden, mittels eines Zufallsgenerators eine Schlüsselnummer als Zufallsnummer ausgewählt und dem jeweiligen Datenpaket als Schlüsselinformation zugeordnet und zusammen mit den Sprachdaten über das IP-Netz 1 übertragen. In einer in dem System 2 angeordneten Schlüsseltabelle wird der zu der Schlüsselnummer zugehörige Schlüssel herausgegriffen und als Algorithmus, beispielsweise auf dem DES basierend, zur Verschlüsselung der Sprachdaten angewendet.

Die verschlüsselten Sprachdaten werden als Nutzdaten in Form eines RTP-Payload zusammen mit der Schlüsselnummer für jedes Datenpaket separat über das IP-Netz 1 an das System 3 gesendet. Dort wird aus jedem Datenpaket die Schlüsselnummer herausgegriffen und einer in dem System 3 angeordneten Schlüsseltabelle, die mit der in dem System 2 angeordneten Schlüsseltabelle identisch ist, als Index zugewiesen. In der Schlüsseltabelle wird auf den dem Index zugeordneten Schlüssel zugegriffen, um ihn zur Entschlüsselung der Sprachdaten zu verwenden. Die entschlüsselten Sprachdaten der einzelnen Datenpakete werden zu einem gemeinsamen Datensatz zusammengesetzt, so daß zusammenhängende, gut verständliche Sätze über die Leitung 17 an das Telefon 8 übertragen werden können.

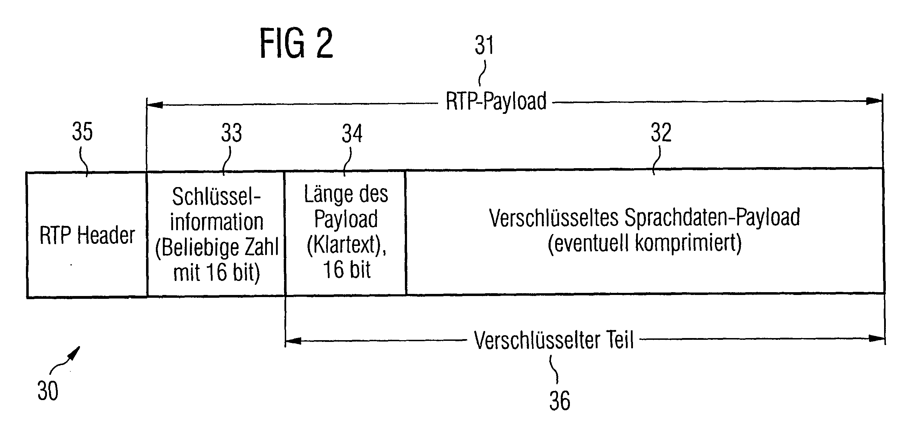

Fig. 2 zeigt die Struktur eines Datenpakets, in welchem Sprachdaten nach dem erfingunsgemäßen Verfahren verschlüsselt sind. Die Struktur des Datenpaketes 30 setzt sich aus dem Nutzdatenvolumen 31 (RTP-Payload), den verschlüsselten Nutzdaten 32, der Schlüsselinformation 33, der Größeninformation 34 über den Datenumfang der verschlüsselten Nutzdaten und den RTP-Headerdaten 35 zusammen. Der Nutzdatenvolumenanteil 31 beinhaltet einen Anteil 36 an verschlüsselten Daten und die Schlüsselinformation 33. Die Schlüsselinformation umfaßt eine Größe von 16 Bits, wovon die 12 niederwertigeren Bits die Schlüsselnummer bilden. Die 12 Bits lassen sich in 4.096 verschiedenen Möglichkeiten miteinander kombinieren, so daß mittels den Schlüsselnummern 4.096 verschiedene Schlüssel aus der Schlüsseltabelle ausgewählt werden können. Wenn jeder dieser Schlüssel 64 Bits umfaßt, ist eine Schlüsseltabelle mit einer Speicherkapazität von 32 Kilobytes erforderlich.

In den vier höherwertigen Bits kann vorzugsweise eine Verschlüsselungsinformation über den verwendeten Verschlüsselungsalgorithmus enthalten sein.

Um den Index in der Schlüsseltabelle des Empfangsortes aus der 16 Bit umfassenden Integer-Zahl der Schlüsselinformation zu ermitteln, werden die 4 höherwertigen Bits der Schlüsselinformation auf 0 gesetzt und aus den restlichen 12 niederwertigen Bits der Index ermittelt. Der Index wird dann dazu verwendet, innerhalb der Schlüsseltabelle einen dem Index zugeordneten Schlüssel, der in der Regel 8 Byte umfaßt, herauszugreifen und zur Entschlüsselung bzw. Verschlüsselung der Sprachdaten zu verwenden. Hierfür kann der Schlüssel auch erst im Moment des Zugreifens ein Generierungsverfahren durchlaufen, in dem er über einen Zufallsgenerator aus einer Anzahl von Schlüsseln ausgewählt wird.

Sämtliche Systeme 2, 3 und 4 weisen innerhalb eines Gesamtsystems inhaltsidentische Schlüsseltabellen auf. Weitere Gesamtsysteme können wiederum andere, ausschließlich in ihrem System geltende Schlüsseltabellen verwenden.

An dieser Stelle sei darauf hingewiesen, daß alle oben beschriebenen Teile und Schritte für sich allein gesehen und in jeder Kombination, insbesondere die in den Zeichnungen dargestellten Details als erfindungswesentlich beansprucht werden.

## Patentansprüche

1. Verfahren zur Ver- und Entschlüsselung von Kommunikationsdaten (32), insbesondere Sprachdaten, welche in einer Mehrzahl von Datenpaketen (30) in einem digitalen Kommunikationsnetz (1), insbesondere für die Internet-Telefonie, übertragen werden;
an einem Sendeort (2, 3, 4) in jedem der Datenpakete (30) die Kommunikationsdaten (32) mit einem ausgewählten Schlüssel verschlüsselt werden,
mit jedem der Datenpakete als Schlüsselinformation eine Schlüsselnummer des ausgewählten Schlüssels übertragen wird und
unter Zuordnung der Schlüsselnummer zu dem in einer an einem Empfangsort (2, 3, 4) eingerichteten Schlüsseltabelle gespeicherten Schlüssel die Kommunikationsdaten (32) entschlüsselt werden,
**dadurch gekennzeichnet, dass**
der Schlüssel durch Bestimmung der Schlüsselnummer (33) mittels eines Zufallsgenerators als Zufallsnummer ausgewählt wird.

2. Verfahren nach Anspruch 1,
**dadurch gekennzeichnet, daß**
am Sendeort und am Empfangsort (2, 3, 4) auf inhaltsidentische Schlüsseltabellen zugegriffen wird.

3. Verfahren nach einem der vorangegangenen Ansprüche,
**dadurch gekennzeichnet, daß**
mit einem der Datenpakete eine Größeninformation (34) über den Datenumfang der Kommunikationsdaten (32) übertragen wird.

4. Verfahren nach einem der vorangegangenen Ansprüche,
**dadurch gekennzeichnet, daß**
der Schlüssel als Algorithmus nach dem Data Encryption Standard und/oder nach dem Advanced Encryption Standard ausgebildet ist.

5. Verfahren nach einem der vorangegangenen Ansprüche,
**dadurch gekennzeichnet, daß**
die Kommunikationsdaten als Nutzdaten mittels des Transportprotokolls User Datagramm Protocol übertragen werden und mittels dem Real Time Protocol Zusatzdaten, wie die Art der Nutzdaten und der Zeitpunkt der Erzeugung der Nutzdaten, in einem jedem der Datenpakete zugeordneten Header (35) übertragen werden.

6. Verfahren nach einem der vorangegangenen Ansprüche,
**dadurch gekennzeichnet, daß**
die Ver- und Entschlüsselung der Kommunikationsdaten (32) innerhalb einer mit einer Mehrzahl von Endgeräten (5-13) verbundenen Telekommunikationsanlage (2-4) durchgeführt wird.

7. Verfahren nach einem der vorangehenden Ansprüche,
**dadurch gekennzeichnet, daß**
in einem Datenpaket eine Verschlüsselungsinformation über einen verwendeten Verschlüsselungsalgorithmus übertragen wird.

## Claims

1. Method for encrypting and decrypting communication data (32), especially speech data, which is transmitted in a plurality of data packets (30) in a digital communication network (1), especially for Internet telephony,
at a send location (2, 3, 4) the communication data (32) is encrypted in each of the data packets (30) with a selected key,
a key number of the selected key is transmitted with each of the data packets as key information and
the communication data (32) will be decrypted by assignment of the key number to the key stored in a key table set up at the receive location (2, 3, 4)
**characterized in that**
the key is selected by defining the key number (33) as a random number by means of a random generator.

2. Method according to claim 1,
**characterised in that**
there is access to key tables with identical content at the send location and the receive location (2, 3, 4).

3. Method according to one of the previous claims,
**characterised in that**
size information (34) about the extent of the communication data (32) is transmitted with one of the data packets.

4. Method according to one of the previous claims,
**characterised in that**
the key is embodied as an algorithm in accordance with the Data Encryption Standard and/or in accordance with the Advanced Encryption Standard.

5. Method according to one of the previous claims,
**characterised in that**
the communication data is transmitted as payload data by means of the User Datagram Protocol transport protocol and additional data such as the type of payload data and the time at which the payload data was created is transmitted by means of the Real Time Protocol in a header (35) assigned to each of the data packets.

6. Method according to one of the previous claims,
**characterised in that**
the communication data (32) is encrypted and decrypted within a telecommunication system (2-4) connected to a plurality of terminals (5-13).

7. Method in accordance with one of the previous claims,
**characterised in that**
encryption information about an encryption algorithm used is transmitted in a data packet.

## Revendications

1. Procédé de chiffrement et de déchiffrement de données de communication (32), en particulier de données vocales qui sont transmises dans une pluralité de paquets de données (30) dans un réseau de communication numérique (1), en particulier pour la téléphonie internet, dans lequel
- les données de communication (32) sont, dans un lieu d'émission (2, 3, 4), chiffrées dans chacun des paquets de données (30) avec une clé sélectionnée,
- un numéro de clé de la clé sélectionnée est transmis en tant qu'information de clé avec chacun des paquets de données et
- les données de communication (32) sont déchiffrées, le numéro de clé étant attribué à la clé stockée dans une table de clés ménagée dans un lieu de réception (2, 3, 4),
**caractérisé en ce que**
la clé est sélectionnée par détermination du numéro de clé (33) en tant que numéro aléatoire au moyen d'un générateur aléatoire.

2. Procédé selon la revendication 1, **caractérisé en ce que**, dans le lieu d'émission et dans le lieu de réception (2, 3, 4), il est accédé à des tables de clés de contenu identique.

3. Procédé selon l'une des revendications précédentes, **caractérisé en ce qu'**une information de grandeur (34) sur le volume des données de communication (32) est transmise avec l'un des paquets de données.

4. Procédé selon l'une des revendications précédentes, **caractérisé en ce que** la clé se présente sous la forme d'un algorithme selon le Data Encryption Standard et/ou selon l'Advanced Encryption Standard.

5. Procédé selon l'une des revendications précédentes, **caractérisé en ce que** les données de communication sont transmises en tant que données utiles au moyen du protocole de transport « User Datagramm Protocol » et des données additionnelles, telles que le type des données utiles et l'instant de la production des données utiles, sont transmises au moyen du « Real Time Protocol » dans un en-tête (35) associé à chacun des paquets de données.

6. Procédé selon l'une des revendications précédentes, **caractérisé en ce que** le chiffrement et le déchiffrement des données de communication (32) sont effectués dans une installation de télécommunication (2-4) reliée à une pluralité de terminaux (5-13).

7. Procédé selon l'une des revendications précédentes, **caractérisé en ce qu'**une information de chiffrement relative à un algorithme de chiffrement utilisé est transmise dans un paquet de données.
